# EUROPEAN PATENT SPECIFICATION

(11) **EP 3 090 920 B1**
(45) Date of publication and mention of the grant of the patent: **23.05.2018**
(21) Application number: 16161017.5
(22) Date of filing: 17.03.2016
(51) Int. Cl.: B62B 5/00, B62B 5/06, B62B 9/00

(54) **POWER ASSISTED CART**
HANDWAGEN MIT MOTOR
CHARIOT AVEC MOTEUR

(30) Priority: 17.03.2015 IT PI20150019
(43) Date of publication of application: 09.11.2016
(73) Proprietor: Doveri, Marco, 56030 Terriciola (PI) (IT); Doveri, Nicolo, 57016 Rosignano Marittimo (LI) (IT); Funaioli, Francesco, 56123 Pisa (IT); Funaioli, Giovanni, 57016 Rosignano Marittimo (LI) (IT)
(72) Inventor: Doveri, Marco, 56030 Terriciola (PI) (IT); Doveri, Nicolo, 57016 Rosignano Marittimo (LI) (IT); Funaioli, Francesco, 56123 Pisa (IT); Funaioli, Giovanni, 57016 Rosignano Marittimo (LI) (IT)
(74) Representative: Celestino, Marco

(56) References cited:
- WO-A1-2012/063476
- FR-A1- 2 591 179
- US-A- 4 161 639
- US-A1- 2015 066 277

## Description

### Field of the invention

The present invention relates to a cart or other push device for objects or people, for example a shopping cart used in supermarkets or malls, but also a baby stroller or wheelchair, or other push carrier for objects and/or people.

### Background of the invention

In supermarkets shopping carts and other auxiliary carriers are known that are driven electrically.

These carts have driving systems of many kinds, for example operated by a joystick or handlebar. However, such carriers are dedicated to professional operators and with difficulties they can be fitted for common users. In fact, they are not servo-assisted machines, but regular industrial carriers.

In IT1358849, in part in the name of the same applicants, a motorised cart for supermarkets is described, comprising a traditional support structure, with basket of and horizontal handlebar, at which a user pushes during the use. The front wheels are idle, whereas the rear wheels are driving wheels having electric motors which can be operated regardless of one another and supplied by a battery. The latter is connected to a lower part of the support structure, in order to be of minimum encumbrance and not to impede an arrangement in row of many carts.

The driving solution proposed by IT1358849 provides that the handlebar is not integral to the support structure, but is connected slidingly in slotted holes of the support structure, so that the right and left end portions of the bar can slide in respective slotted holes. The right and left ends of the bar are in turn connected to respective connecting arms pivotally joined to the support structure by a hinge. Near the hinge, for each arm, a pair of opposite springs is provided, associated with a potentiometer actuating respective right and left motors of the respective driving wheels.

Pushing or twisting the handlebar causes a subsequent rotation of the arms, and then the operation of the motors, causing the cart to run in a desired direction, whereas when releasing the handlebar an elastic recovery of the arms owing to the springs is obtained. The travel the cart is linear if the push of the handlebar has a parallel resultant pushing force on the midplane of the cart. The cart instead follows a curvilinear travel if the resultant pushing force is not centred in the midplane.

An aspect of the cart disclosed in IT1358849 is that the handlebar, being connected to the motor by the connecting arms, is sensitive to loading forces both in in the pushing horizontal direction and in a vertical direction supporting the weight of the arms of the user.

This determines that when the user produces pushing forces parallel to the ground, the cart moves in a servo-assisted way. However, a drawback is that the cart can move also when the user rests simply the arms on the handlebar, and does not produce any pure pushing forces, with a minimum component of weighing force capable of creating a pair that operates the rotation of the arms about the hinge. This would determine an undesired operation of the motor and an undesired travel of the cart, in a not expected direction. Such drawback jeopardizes the manoeuvrability and the simple operation of the cart by the user. In fact, such an easy driving and operating configuration of the electric motors by the connecting arms is not always responsive to the controls imparted by the user, determining a not ideal manoeuvrability of the cart.

The cart according to the prior art, also for the presence of the connecting arms and of the hinges is also structurally expensive to manufacture, since it needs a modification of the structure thereof. Furthermore, to protect the arms from breaking, for possible hits during the operation or the parking of the carts, a protection casing is necessary, with higher costs and unaesthetic effects.

In FR2591179 a similar driven cart is described for supermarkets having a handlebar, made in two parts, a fixed part integral to the basket and a movable part, which is associated with a control device for operating a motor. By moving the movable part in the various positions, in a way biased by a spring, it is possible to start, stop and adjust the speed of the cart in a way proportional to the approaching distance between the two portions. Even in this case, when the user rests simply on the handlebar, a movement is obtained with speed proportional to the supporting force. However, there is the drawback that the user must be careful not to rest on the rod when the cart moves, otherwise a not wanted operation of the motor and travel of the cart is obtained. This type of cart is driven, but not servo-assisted, since the horizontal pushing movement and vertical actuation of the handlebar are orthogonal to each other. The user will then choose between a not servo-assisted pure push of the cart, and a pure operation of the driving wheels by resting the own hands weight on the handlebar, but since the two movement are orthogonal to each other, in a difficult way the adjustments of the two components of movement is permitted, and the speed is adjusted by dosing proportionally the own hands weight on the movable part, to contrast proportionally the force of the spring.

In US4161639 a self-propelled device is described such as a snow mill, a lawn mower, a self-propelled garden cultivator, where a handlebar is provided that has a switch that extends for all its length. The user, behind the tool can pull the switch while gripping the handlebar. Such type of switch has a function of safety, to avoid that the user can get injured with the knives of the tool. In fact, the only way for pulling towards the user the switch is when the operator is located opposite to the knives with respect to the handlebar. Such type of switch is therefore the opposite of a servo-assisted carrier, and is used only to operate the rotation of the blades.

### Summary of the invention

It is therefore a feature of the present invention to provide a cart or other push servo-assisted device that solves the drawback of the carts according to the prior art, improving the manoeuvreability for the user.

It is also a feature of the present invention to provide a cart or other push servo-assisted device, which is structurally easy and not expensive to make and that permits to arrange the carts to form a row of carts of minimum encumbrance, with minimum risk of causing damages to the actuation mechanism.

It is a further feature of the present invention to provide a cart or other push servo-assisted device that is obtained with minimum changes to existing carts or other push devices.

It is then a feature of the present invention to provide a cart or other push servo-assisted device that is made easily in any form selected from the group consisting of: carts for supermarkets or malls, but also of the type used as baby stroller or wheelchair, or other push carrier for carrying people and/or goods.

These and other objects are achieved by a servo-assisted push cart as defined in claim 1. Preferred embodiments are defined in the dependent claims.
The cart comprises:
- a support frame that defines a loading space of goods or persons;
- a pair of driving wheels mounted to the support frame;
- at least one pivoting wheel mounted to the support frame;
- a handlebar arranged to be grasped by the user for moving the cart;
- a motor that is arranged to operate the driving wheels;
- a battery arranged to feed the motor;
- a control unit for the motor configured for activating selectively and independently the motor of the respective driving wheels;
wherein the control means is operatively associated with the handlebar and comprises:
- a first end portion with a first coupling portion associated with the handlebar;
- a second end portion with a second coupling portion associated with the handlebar and opposite to the first end portion;
- a first control block that comprises a first guide functionally coupled to the first coupling portion;
- a second control block, opposite to the first control block with respect to the handlebar, and that comprises a second guide functionally coupled to the second coupling portion,
wherein the first and second control blocks are integral to the support frame and the first and the second guides define respectively and the first and second coupling portion a translational lock for a push movement of said handlebar in a direction of said support frame in a sliding plane, which in use is substantially parallel to the ground.

This way, the translational lock provided by the first and the second coupling portions for the end portions of the handlebar with the respective guide of the control blocks determines that, concerning effects on the movement of the cart, driving actions imparted by the user are limited only to their components along the sliding plane, i.e. in a direction substantially parallel to the ground, whereas the vertical components of the driving actions imparted by the user do not cause any effects. This allows activating the motors in servo-assistance only when the user applies a pushing force to the handlebar that has a component along the sliding plane, and to convert into movement of the cart only such components, thus avoiding undesired operation of the motor, for example when the user rests on the handlebar mainly with vertical components, without applying any pushing or pulling forces. This way, the pushing movement of the user triggers an extremely natural servo-assistance, since the sole user's horizontal pushing components are servo-assisted. The user, then will have always the sensation of driving a cart without the impression of operating any motor, by a pushing action on the cart which resembles a light cart without motors, obtaining a true servo-assisted push. Furthermore, even resting the hands weight on the handlebar, the user will not have the effect of causing an undesired operation of the cart.

The existence of the control blocks allows then minimum alterations to the upper structure of existing carts, being enough to replace an existing rod or handlebar with a unit comprising a handlebar/control blocks, according to the invention.

Such a configuration, moreover, does not expose laterally the control blocks, with minimum risk of break for lateral hits side or need for protection casings.

The servo-assisted push cart according to the present invention is much more manoeuvrable and easy to use with respect to similar carts and carriers for people and/or goods of the prior art, allowing an independent and precise operation of the motors mounted to the respective driving wheels. The user would be positioned in front of a "normal" cart and, with an instinctive action of pushing it, would activate coherently the motor, assisting the movement of the cart proportionally to its resistance against the pushing action, for example because loaded by goods.

In a possible exemplary embodiment, the translational lock for the movement of the handlebar in a sliding plane that is substantially parallel to the ground is obtained by a sliding coupling between the first and second guide of the control blocks and the first and second coupling portions respectively.

In an alternative exemplary embodiment, the translational lock for the movement of the handlebar in a sliding plane that is substantially parallel to the ground is obtained by a four-bar linkage between the first and second guide of the control blocks, respectively, and the first and second coupling portions.

Other exemplary embodiments, to allow a movement of the handlebar in a sliding plane that is substantially parallel to the ground, can be made in a way easily reached by a skilled person.

In particular, the control units for the motor present in the control blocks comprise resilient means that are arranged to apply an opposing force for biasing the movement of the respective first or second end portions of the handlebar starting from a neutral position, at which the motors are not operated. Therefore, in order to operate the motor and then operate the cart, the user, acting on the handlebar, must simply exceed the opposing force of the resilient means, applying a push like pushing a normal cart. Furthermore, in case of a very light cart, the push on the cart causes a minimum or zero sliding with compression of the resilient means, whereas with a heavy cart there is a full compression of the resilient means.

In particular, when the user pushes the handlebar in a symmetric way, the motor will be operated substantially synchronous allowing to displace the cart forward or back along a direction substantially linear, in a servo-assisted way. More in detail, owing to the precise sliding of the first and second coupling portions in the respective guides of the control blocks, with the bias of the resilient means, which are configured for a fine adjustment of the movement, a completely natural servo-assisted push is obtained. This way, in case of cart full of goods or carrying a person, the servo-assisted movement permits a feeling of the push like an empty cart. Then, a combination of the resilient means, for example opposite springs that act against the prismatic surfaces present in the control blocks, and the precise sliding of the prismatic surfaces in the guide, allow moving a full cart with a resistance completely similar to the resistance given by the push of a traditional empty cart.

In particular, for causing the cart to turn right, or left, the user moves the handlebar, pushing the first end of the same and pulling the second end and vice-versa. However, by the invention, the rotation is carried out in a way completely intuitive and natural owing to the resistance of the resilient means, with a feeling like turning a not servo-assisted empty cart. This allows the user to forget the presence of a servo-assistance by the driving wheels, also in case of full cart, where it is necessary to make sudden or sharp turns, as often it is necessary for following a desired trajectory, for example in the lanes of a supermarket. In this case the motors of the driving wheels are operated independently, also in opposite directions, with fine and direct adjustment of the position, operating the motor corresponding to the driving wheel external with respect to the turning direction of the cart.

Advantageously, the control means comprises, in the control blocks, adjustment means for adjusting the power, or their speed, transmitted by the motor, the adjustment means arranged to provide a control signal to the motor proportional to the stroke of the end portions along the guides.

In particular, the adjustment means comprises at least one rheostat or other system of adjustable type.

Alternatively, the adjustment means comprises a sensor element capable of measuring the movement and/or the load at the corresponding end portions of the handlebar. For example a position transducer can be provided.

This way, the adjustment means allows adjusting the motor in a fine way, according to the stroke of the end portions, i.e. of the distance from a neutral point for adjusting in a way proportional the power of the motor on each driving wheel of the cart.

This way, responsive to the force of the user on the handlebar, dependent mainly by the resistance opposed by the cart, the motors are operated, in order to actuate the cart in the predetermined direction.

For example, for causing the cart to turn the handlebar is pushed more at the side external to the turn; then the servomotor that operates the respective driving wheel will assist more the rotation increasing its speed and/or power than the internal motor. In other words, for causing the cart to turn, the handlebar is pushed by one hand and pulled by the other hand. This step allows a much more precise servo-assisted movement than in the carts of the prior art.

In particular, the resilient means can have an adjustable stiffness, for example they can be adjusted, in order to provide a predetermined force.

In a preferred exemplary embodiment, the battery used for feeding the motors is of rechargeable type and is mounted releasable in a supply housing obtained on the cart.

The battery can therefore be located in the cart only when the latter is used for being then brought to a charging station. Advantageously, the battery is drawn by the charging station by means of a recognition element, for example a card containing a data code, through which the user is authorized to pick up the battery.

Preferably the supply housing for the battery provides the introduction of the battery to operate the release of the fastening means that lock the cart to a storage position or to another cart with which it is coupled in a removable way.

Vice-versa, after the use, when the cart is stored in the storage position and engaged the lock means, the battery can be released and can be brought to a charging station. At the charging station, it can be provided that the battery is released with a authentication system, for example by a authentication card.

### Description of a preferred exemplary embodiment

Further characteristic and the advantages of the invention are better shown by the following detailed description of more embodiments, but not limitative, shown with reference to the attached drawings, wherein:
- Fig. 1 shows a perspective view of a servo-assisted push cart according to the present invention;
- Fig. 2 shows a perspective enlarged view of the cart of Fig. 1 at the handlebar of the same;
- Fig. 3 shows a diagrammatical view of the control means mounted to the handlebar for independent operation of the motor;
- Fig. 3A shows a diagrammatical enlarged view of the guide and of the end portion of the handlebar that make up the control means;
- Figs. 4 and 5 show a top plan view of the cart of Fig. 1 and respectively the operation of the handlebar with respect to a neutral position for turning the cart;
- Fig. 6 shows a perspective view of an alternative exemplary embodiment of the push cart with a different support frame having a flat base;
- Fig. 7 shows an exemplary embodiment of the cart in the form of a stroller.

### Detailed description of the invention

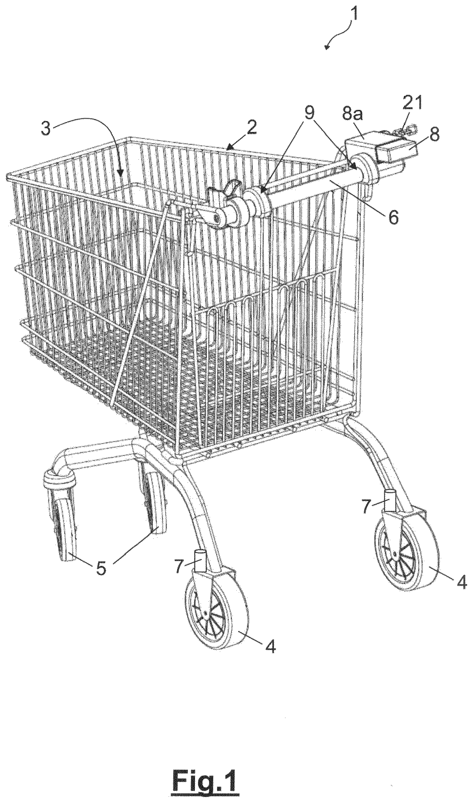

In Fig. 1 a servo-assisted push cart 1 is shown, according to the present invention, which comprises a support frame 2 that defines a loading space of goods or persons 3, a pair of driving wheels 4 mounted to the support frame 2 and a pair of directional wheels 5 cooperating with the driving wheels 4.

The cart also comprises a handlebar 6 conformed for being grasped by the user to manoeuvre cart 1. Handlebar 6 is shown as a single rod but shall be understood also as two rod portions different from each other.

Motors are also provided, in particular a pair of servomotors 7, for example of electric type, which are arranged each at a driving wheel 4 causing its rotation about its own axis.

Servomotors 7 are supplied by a battery 8 and are in turn operated by respective control means 9, which allows activating selectively and independently servomotors 7 and causing the cart to travel or turn according to a predetermined direction selected by the user, as described below in detail.

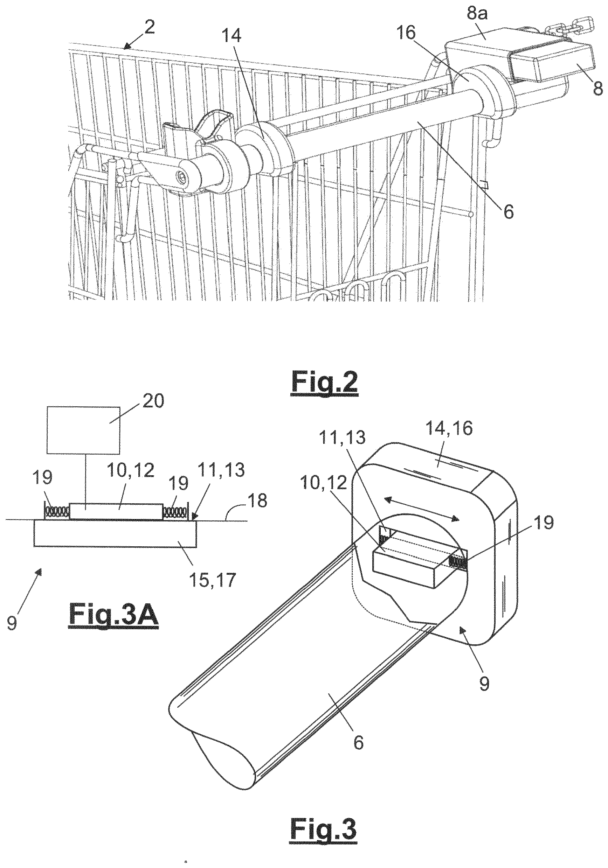

More in particular, the control means is operatively associated with handlebar 6 (Fig.2) and, as better shown in Figs. 3 and 3A, for simplicity shown only for a single part, comprises a first end portion 10 with a first coupling portion 11 (Fig.3A) obtained on handlebar 6, and an opposite second end portion 12 with a second coupling portion 13.

Furthermore, the control means 9 comprises a first control block 14 that comprises a first guide 15 functionally coupled to the first end portion 10 and a second control block 16, opposite to the first control block 14, which comprises a second guide 17 functionally coupled to the second end portion 12.

As shown in Fig. 3A the first and second guides 15,17 define respectively with first and second coupling portions 11,13 of the end portions 10,12, a translational lock for moving end portions 10,12, and then handlebar 6, in a sliding plane 18 (Fig. 3A), that in use is substantially parallel to the rolling plane of wheels 4 and 5, i.e. to the ground.

Sliding plane 18 is, advantageously, a horizontal plane.

The coupling is preferably prismatic, which as known allows causing to move handlebar 6 only along sliding plane 18, limiting orthogonal movement to the same, or in any case avoiding that vertical forces can generate undesired travelling. More in detail, the guides 15 and 17 can be arranged to form a sliding coupling in the respective control blocks 14 and 16. In particular, in an obvious way for a skilled person, the translational movement obtainable through the sliding coupling can be obtained by a coupling of other kind.

For example, the coupling can be made by a four-bar linkage, or other translational lock for moving end portions 10,12 substantially parallel to the ground.

These embodiments are not shown in detail in Figs. Since obvious for a skilled person.

This makes it possible to limit the operation of the servomotors only when the user moves handlebar 6 along sliding plane 18, i.e. parallel to the relative sliding surfaces 11,13.

Handlebar 6 can therefore be operated in a symmetric way, i.e. acting substantially in same way on both ends. This makes it possible to operate servomotors 7 substantially contemporaneously allowing cart 1 of moving in a straight direction.

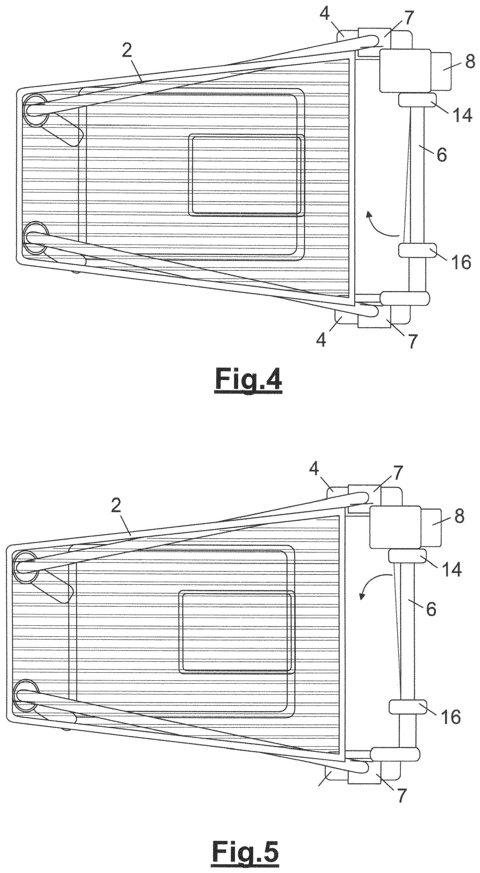

Vice-versa, as shown in detail in Figs. 4 and 5, when handlebar 6 is operated in an asymmetric way, i.e. acting in a differential way on the end of handlebar 6, the servomotors of the driving wheels 4 are operated independently with operation of servomotor 7 that corresponds to the external driving wheel 4 with respect to the turning direction of cart 1.

More in particular, as shown in Figs. 3 and 3A the control means 9 comprises a pair of resilient elements 19 arranged at opposite sides with respect to the relative end portions 10,12 and put in the respective guides 15,17. The pair of resilient elements 19 produce an opposing force with respect to the conveying direction of the respective first or second end portions of handlebar 6 between a neutral position, at which the servomotors are not operated, and an actuated configuration (Figs. 4 and 5), where servomotors 7 are operated selectively or at the same time. Therefore, in order to operate servomotors 7 and causing the cart to move the user acting on handlebar 6 must exceed the opposing force of the resilient elements 19. The resilient elements can have an adjustable stiffness, for example it can be adjusted, in order to provide a predetermined force.

When the user pushes handlebar 6 in a symmetric way, servomotors 7 will be operated substantially synchronous allowing to displace cart 1 along a substantially straight direction, indicated in Fig. 3 by a bidirectional arrow, forwards, or backwards, in a servo-assisted way. More in detail, owing to the precise sliding of the first and second coupling portion 11, 13, in the respective guides 15, 17 of control blocks 14, 16, with the bias of the resilient elements 19, which are configured for a fine adjustment of the movement, a completely natural servo-assisted push is obtained. This way, in case of cart 1 full of goods, or carrying a person, the servo-assisted movement causes the felt push be like an empty cart. Then, a combination of the resilient means 19, for example opposite springs that act against the prismatic surfaces present in the control blocks, and the precise sliding of the prismatic surfaces in the guide, allows moving a loaded cart 1 with a resistance completely similar to the resistance offered by the push of a traditional empty cart 1.

For causing the cart to turn right, or left, the user moves handlebar 6, pushing on the first end of the same and pulling the second end and vice-versa. In particular, by the invention, turning is carried out in a way completely intuitive and natural owing to the resistance of the resilient means, always like turning an empty not servo-assisted cart 1. This allows the user not to realize of the presence of a servo-assistance by the driving wheels 4, also in case of fully loaded cart 1, also when a very sharp or sudden change of direction is necessary, like for causing cart 1 to follow a desired trajectory, for example in the lanes of a supermarket. In this case, servomotors 7 of the driving wheels 4 are operated independently, also in opposite directions, with fine and direct adjustment of the position, operating the motor 7 corresponding to the external driving wheel with respect to the turning direction of cart 1.

Advantageously, the control means further comprises an adjustment means 20 (Fig.3A) for adjusting the power transmitted to the servomotors 7, diagrammatically shown, which allow to generate a control signal to servomotors 7 proportional to the stroke of end portions 10,12 along the respective guides 15,17.

In particular, the adjustment means comprises an at least one rheostat of adjustable type.

Alternatively, the adjustment means comprises a sensor element capable of measuring the movement and/or the load at the corresponding end portions of handlebar 6. For example, a position transducer is provided as sensor.

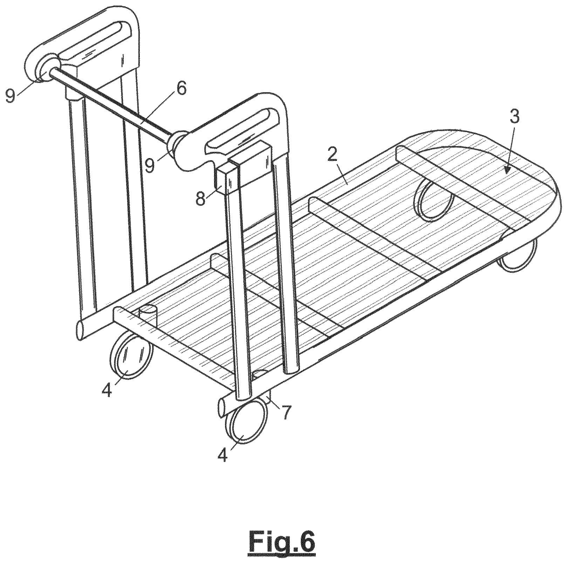

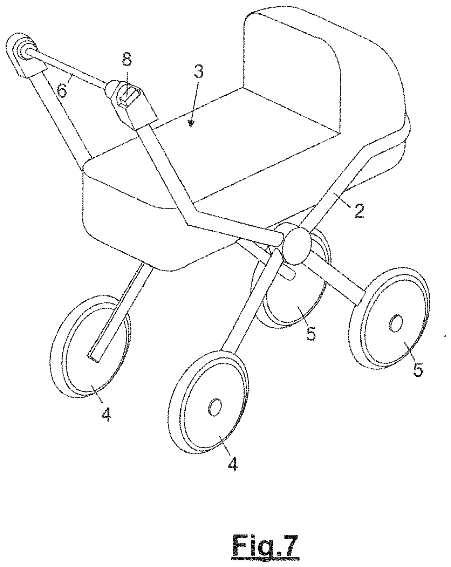

In the preferred exemplary embodiment of Fig. 1 and in the exemplary embodiments of the cart of Fig. 6 and 7, the battery 8 is of rechargeable type and is releasably arranged in a supply housing 8a obtained on handlebar 6.

This way, the battery 8 can be located in supply housing 8a of cart 1 only when the latter is used for being then brought to a charging station. Advantageously, said battery is drawn by the charging station by means of a recognition element, for example a card containing a data code, through which the user is authorized to pick up the battery.

Preferably the supply housing for the battery provides the introduction of the battery to operate the release of the fastening means 21 (Fig. 1 and 2) that lock the cart to a storage position or to another cart with which it is coupled in a removable way.

Vice-versa, after the use, when the cart is stored in the storage position and the lock means is engaged, the battery is released and can be brought to a charging station.

Figs. 6 and 7 show exemplary embodiments of the cart that can have a support frame with flat base and work as load carrier, or is shaped as baby stroller for babies, or, in a way not shown, as wheelchair, hospital bed or other carrier for people and/or goods. These exemplary embodiments can be arranged for operation like cart 1 activated by the handlebar described above.

The foregoing description of specific exemplary embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to realise the different functions described herein could have a different nature without, for this reason, departing from the field of the invention. it is to be understood that the phraseology or terminology that is employed herein is for the purpose of description and not of limitation. The invention should be limited only by the appended claims.

## Claims

1. A push servo-assisted cart (1) comprising:
- a support frame (2) that defines a loading space of goods or persons (3);
- a pair of driving wheels (4) mounted to the support frame (2);
- at least one pivoting wheel (5) mounted to the support frame (2), arranged to cooperate with said pair of driving wheels (4);
- a handlebar (6) arranged to be grasped by the user for moving said cart (1);
- motors (7) arranged to operate the driving wheels (4) ;
- a battery (8) arranged to feed said motors (7);
- a control means (9) of the motors (7) configured for activating selectively and independently said motors (7) for each of said respective driving wheels (4) ;
wherein said control means (9) is operatively associated with said handlebar (6) and comprises:
- a first end portion (10) with a first coupling portion (11) associated with said handlebar (6);
- a second end portion (12) with a second coupling portion (13) associated with said handlebar (6) and opposite to said first end portion (10);
- a first control block (14) that comprises a first guide (15) functionally coupled to said first coupling portion (11);
- a second control block (16), opposite to said first control block (14) with respect to said handlebar (6), which comprises a second guide (17) functionally coupled to said second coupling portion (13),
wherein said first and second control blocks (14, 16) are integral to said support frame, and wherein said first guide (15) and said second guide (17) define respectively with said first coupling portion (11) and said second coupling portion (13) a translational lock for a push movement of said handlebar in a direction of said support frame in a sliding plane (18) that, in use, is substantially parallel to the ground.

2. A cart (1) according to claim 1, wherein said translational lock for the movement of the handlebar (6) in a sliding plane that is substantially parallel to the ground is obtained by a sliding coupling between the first and second guide of said control blocks, respectively, and the first and second coupling portions.

3. A cart (1) according to claim 1, wherein said translational lock for the movement of the handlebar (6) in a sliding plane that is substantially parallel to the ground is obtained by a four-bar linkage arranged between the first and second guide of the blocks, respectively, and the first and second coupling portions.

4. A cart (1) according to claim 1, wherein said handlebar and said control blocks form a control unit configured to mount integrally to said support frame.

5. A cart (1) according to any of claims 1 or 2, wherein said control means (9) of the motors (7) comprises:
a resilient means (19) arranged to apply an opposing force for biasing the movement of the respective first (10) and second (12) end portions of the handlebar (6) from a neutral position, at which the motors are not operated, to an active position at which said motors (7) are active.

6. A cart (1) according to claim 5, wherein said resilient means (19) has an adjustable stiffness.

7. A cart (1) according to claim 5, wherein said resilient means (19) is adapted to be adjusted to provide a predetermined force.

8. A cart (1) according to any of claims 1-3, wherein said control means (9) comprises also an adjustment means (20) for adjusting the power transmitted to said motors (7), said adjustment means (20) arranged to provide a control signal to said motors (7) proportional to the stroke of said end portions (10, 12) along said respective guide (15,17).

9. A cart (1) according to claim 8, wherein said adjustment means (20) comprises at least one rheostat of adjustable type.

10. A cart (1) according to claim 8, wherein said adjustment means comprises a sensor element capable of measuring the movement and/or the load at the corresponding end portions of said handlebar, in particular a position transducer is provided.

11. A cart (1) according to any of claims 1-8, wherein said battery (8) is of rechargeable type and is releasably mounted to a supply housing (8a) obtained on the cart.

12. A cart (1) according to claim 11, wherein the supply housing provides the introduction of the battery to operate the release of the fastening means (21) that lock said cart to a storage position, or to another cart, with which it is coupled in a removable way.

13. A cart (1) according to claim 12, wherein a safety means is further provided arranged to avoid the release of said battery from said cart (1) until said fastening means is not added said cart (1).

14. A cart (1) according to claim 1, wherein said first and said second control blocks (14,16) are configured in such a way that, when said handlebar (6) is operated in a symmetric way, said motors (7) are operated substantially synchronously, to allow to displace the cart (1) along a direction substantially linear forwards, or backwards, in a servo-assisted way.

15. A cart (1) according to claim 1, wherein said first and said second control blocks (14,16) are configured in such a way that, when said handlebar (6) is operated pushing on said first end and pulling said second end, said motors (7) are operated with opposite directions of rotation, in order to cause a rotation on the right side, or on the left side of said cart (1) .

## Patentansprüche

1. Servounterstützter Schiebewagen (1), umfassend:
- einen Unterstützungsrahmen (2), der eine Ladefläche für Waren oder Personen (3) definiert;
- ein Paar Antriebsräder (4), die am Unterstützungsrahmen (2) montiert sind;
- mindestens ein schwenkbares Rad (5), das am Unterstützungsrahmen (2) montiert ist, das angeordnet ist, um mit dem Paar Antriebsrädern (4) zusammenzuwirken;
- eine Griffstange (6) die angeordnet ist, um von dem Benutzer zum Bewegen des Wagens (1) gegriffen zu werden;
- Motoren (7), die zum Betreiben der Antriebsräder (4) angeordnet sind;
- eine Batterie (8), die angeordnet ist, um die Motoren (7) zu speisen;
- eine Steuereinrichtung (9) der Motoren (7), die zum selektiven und unabhängigen Aktivieren der Motoren (7) für jedes der jeweiligen Antriebsräder (4) gestaltet ist;
wobei die Steuereinrichtung (9) betriebsmäßig der Griffstange (6) zugeordnet ist und Folgendes umfasst:
- einen ersten Endteil (10) mit einem ersten Kopplungsteil (11), der der Griffstange (6) zugeordnet ist;
- einen zweiten Endteil (12) mit einem zweiten Kopplungsteil (13), der der Griffstange (6) zugeordnet ist und dem ersten Endteil (10) abgewandt ist;
- einen ersten Steuerblock (14), der eine erste Führung (15) umfasst, die funktionsmäßig mit dem ersten Kopplungsteil (11) gekoppelt ist;
- einen zweiten Steuerblock (16), der dem ersten Steuerblock (14) in Bezug auf die Griffstange (6) gegenüberliegt,
welcher eine zweite Führung (17) umfasst, die funktionsmäßig mit dem zweiten Kopplungsteil (13) gekoppelt ist,
wobei der erste und zweite Steuerblock (14, 16) im Unterstützungsrahmen integriert sind, und wobei die erste Führung (15) und die zweite Führung (17) jeweils mit dem ersten Kopplungsteil (11) und dem zweiten Kopplungsteil (13) eine translatorische Sperre für eine Schiebebewegung der Griffstange in einer Richtung des Unterstützungsrahmens in einer Gleitebene (18), die, bei Benutzung, im Wesentlichen parallel zum Boden ist, definieren.

2. Wagen (1) nach Anspruch 1, wobei die translatorische Sperre für die Bewegung der Griffstange (6) in einer Gleitebene, die im Wesentlichen parallel zum Boden ist, durch eine Schiebekupplung zwischen der ersten bzw. zweiten Führung der Steuerblöcke und dem ersten und zweiten Kopplungsteil erreicht wird.

3. Wagen (1) nach Anspruch 1, wobei die translatorische Sperre für die Bewegung der Griffstange (6) in einer Gleitebene, die im Wesentlichen parallel zum Boden ist, durch ein Gelenkviereck erreicht wird, das zwischen der ersten bzw. zweiten Führung der Steuerblöcke und dem ersten und zweiten Kopplungsteil angeordnet ist.

4. Wagen (1) nach Anspruch 1, wobei die Griffstange und die Steuerblöcke eine Steuereinheit bilden, die so gestaltet ist, dass sie einstückig am Unterstützungsrahmen angebracht ist.

5. Wagen (1) nach einem der Ansprüche 1 oder 2, wobei die Steuereinrichtung (9) der Motoren (7) Folgendes umfasst:
ein federndes Mittel (19), das angeordnet ist, um eine Gegenkraft auszuüben, um die Bewegung des jeweiligen ersten (10) und zweiten (12) Endteils der Griffstange (6) von einer neutralen Position, bei der die Motoren nicht betrieben werden, zu einer aktiven Position, bei der die Motoren (7) aktiv sind, vorzuspannen.

6. Wagen (1) nach Anspruch 5, wobei das federnde Mittel (19) eine einstellbare Steifigkeit aufweist.

7. Wagen (1) nach Anspruch 5, wobei das federnde Mittel (19) dazu eingerichtet ist, eingestellt zu werden, um eine vorbestimmte Kraft bereitzustellen.

8. Wagen (1) nach einem der Ansprüche 1-3, wobei die Steuereinrichtung (9) auch eine Einstelleinrichtung (20) zum Einstellen der zu den Motoren (7) übertragenen Energie umfasst, wobei die Einstelleinrichtung (20) angeordnet ist, um den Motoren (7) ein Steuersignal bereitzustellen, das proportional zum Hub der Endteile (10, 12) entlang der jeweiligen Führung (15, 17) ist.

9. Wagen (1) nach Anspruch 8, wobei die Einstelleinrichtung (20) mindestens einen einstellbaren Regelwiderstand umfasst.

10. Wagen (1) nach Anspruch 8, wobei die Einstelleinrichtung ein Sensorelement umfasst, das in der Lage ist, die Bewegung und/oder die Last an den entsprechenden Endteilen der Griffstange zu messen, insbesondere ist ein Wegmesssystem bereitgestellt.

11. Wagen (1) nach einem der Ansprüche 1-8, wobei die Batterie (8) wiederaufladbarer Art ist und lösbar an einem am Wagen erhaltenen Versorgungsgehäuse (8a) montiert ist.

12. Wagen (1) nach Anspruch 11, wobei das Versorgungsgehäuse die Einführung der Batterie bereitstellt, um das Lösen der Befestigungsmittel (21) zu betreiben, die den Wagen an einer Aufbewahrungsposition oder an einem anderen Wagen arretieren, mit denen er auf lösbare Art gekoppelt ist.

13. Wagen (1) nach Anspruch 12, wobei eine Sicherheitseinrichtung ferner bereitgestellt ist, die angeordnet ist, um das Lösen der Batterie von dem Wagen (1) zu verhindern, bis das Befestigungsmittel nicht dem Wagen (1) hinzugefügt ist.

14. Wagen (1) nach Anspruch 1, wobei der erste und zweite Steuerblock (14, 16) derart gestaltet sind, dass, wenn die Griffstange (6) auf symmetrische Art bedient wird, die Motoren (7) im Wesentlichen synchron betrieben werden, um es zu ermöglichen, den Wagen (1) entlang einer Richtung im Wesentlichen linear vorwärts, oder rückwärts, in einer servounterstützten Art zu verschieben.

15. Wagen (1) nach Anspruch 1, wobei der erste und zweite Steuerblock (14, 16) derart gestaltet sind, dass, wenn die Griffstange (6) mit Drücken am ersten Ende und Ziehen am zweiten Ende bedient wird, die Motoren (7) mit entgegengesetzten Drehrichtungen betrieben werden, um eine Rotation an der rechten Seite oder an der linken Seite des Wagens (1) zu bewirken.

## Revendications

1. Chariot à pousser à servodirection (1), comprenant :
- un châssis de support (2) qui définit un espace de chargement de marchandises ou de personnes (3) ;
- deux roues motrices (4) montées sur le châssis de support (2) ;
- au moins une roue pivotante (5) montée sur le châssis de support (2), conçue pour coopérer avec lesdites deux roues motrices (4) ;
- une barre d'appui pour les mains (6) conçue pour être saisie par l'utilisateur afin de déplacer ledit chariot (1) ;
- des moteurs (7) conçus pour coopérer avec les roues motrices (4) ;
- une batterie (8) conçue pour alimenter lesdits moteurs (7) ;
- un moyen de commande (9) des moteurs (7) conçu pour activer sélectivement et indépendamment lesdits moteurs (7) de chacune desdites roues motrices respectives (4) ;
dans lequel ledit moyen de commande (9) est fonctionnellement associé à ladite barre d'appui pour les mains (6) et comprend :
- une première partie d'extrémité (10) dotée d'une première partie de couplage (11) associée à ladite barre d'appui pour les mains (6) ;
- une seconde partie d'extrémité (12) dotée d'une seconde partie de couplage (13) associée à ladite barre d'appui pour les mains (6) et située à l'opposé de ladite première partie d'extrémité (10) ;
- un premier bloc de commande (14) qui comprend un premier guide (15) fonctionnellement couplé à ladite première partie de couplage (11) ;
- un second bloc de commande (16), situé à l'opposé dudit premier bloc de commande (14) par rapport à ladite barre d'appui pour les mains (6), qui comprend un second guide (17) fonctionnellement couplé à ladite seconde partie de couplage (13),
dans lequel lesdits premier et second blocs de commande (14, 16) sont intégrés audit châssis de support, et dans lequel ledit premier guide (15) et ledit second guide (17) définissent respectivement avec ladite première partie de couplage (11) et ladite seconde partie de couplage (13) un verrou de translation permettant un déplacement de poussée de ladite barre d'appui pour les mains dans une direction dudit châssis de support sur un plan de glissement (18) qui, en utilisation, est sensiblement parallèle au sol.

2. Chariot (1) selon la revendication 1, dans lequel ledit verrou de translation permettant le déplacement de la barre d'appui pour les mains (6) dans un plan de glissement sensiblement parallèle au sol est obtenu par un couplage de glissement respectif entre les premier et second guides desdits blocs de commande et lesdites première et seconde parties de couplage.

3. Chariot (1) selon la revendication 1, dans lequel ledit verrou de translation permettant le déplacement de la barre d'appui pour les mains (6) dans un plan de glissement sensiblement parallèle au sol est obtenu par une tringlerie à quatre barres disposées respectivement entre les premier et second guides des blocs et les première et seconde parties de couplage.

4. Chariot (1) selon la revendication 1, dans lequel ladite barre d'appui pour les mains et lesdits blocs de commande forment une unité de commande conçue pour un montage intégré audit châssis de support.

5. Chariot (1) selon l'une quelconque des revendications 1 ou 2, dans lequel ledit moyen de commande (9) des moteurs (7) comprend :
un moyen élastique (19) conçu pour appliquer une force d'opposition permettant de solliciter le déplacement des première (10) et seconde (12) parties d'extrémité respectives de la barre d'appui pour les mains (6) d'une position neutre, à laquelle les moteurs ne sont pas mis en oeuvre, à une position active à laquelle lesdits moteurs (7) sont actifs.

6. Chariot (1) selon la revendication 5, dans lequel ledit moyen élastique (19) a une rigidité réglable.

7. Chariot (1) selon la revendication 5, dans lequel ledit moyen élastique (19) est conçu pour un réglage permettant d'obtenir une force prédéterminée.

8. Chariot (1) selon l'une quelconque des revendications 1 à 3, dans lequel ledit moyen de commande (9) comprend également un moyen de réglage (20) permettant de régler la puissance transmise auxdits moteurs (7), ledit moyen de réglage (20) étant conçu pour délivrer un signal de commande auxdits moteurs (7) proportionnel à la course desdites parties d'extrémité (10, 12) le long desdits guides respectifs (15, 17).

9. Chariot (1) selon la revendication 8, dans lequel ledit moyen de réglage (20) comprend au moins un rhéostat de type réglable.

10. Chariot (1) selon la revendication 8, dans lequel ledit moyen de réglage comprend un élément capteur pouvant mesurer le déplacement et/ou la charge au niveau des parties d'extrémité correspondantes de ladite barre d'appui pour les mains, un transducteur de position étant particulièrement prévu.

11. Chariot (1) selon l'une quelconque des revendications 1 à 8, dans lequel ladite batterie (8) est de type rechargeable et est montée amovible sur un boîtier d'alimentation (8a) obtenu sur le chariot.

12. Chariot (1) selon la revendication 11, dans lequel le boîtier d'alimentation permet l'introduction de la batterie pour mettre en oeuvre la libération du moyen de fixation (21) qui verrouille ledit chariot à une position de stockage, ou à un autre chariot, avec lequel ce dernier est couplé de façon amovible.

13. Chariot (1) selon la revendication 12, dans lequel un moyen de sécurité est en outre prévu, ledit moyen de sécurité étant conçu pour éviter la libération de ladite batterie dudit chariot (1) tant que ledit moyen de fixation n'a pas été ajouté audit chariot (1).

14. Chariot (1) selon la revendication 1, dans lequel lesdits premier et second blocs de commande (14, 16) sont conçus de sorte que, lorsque ladite barre d'appui pour les mains (6) fait l'objet d'une manipulation symétrique, lesdits moteurs (7) sont mis en oeuvre de manière sensiblement synchrone, de façon à permettre un déplacement du chariot (1) dans un sens vers l'avant, ou vers l'arrière, sensiblement en ligne droite, par servodirection.

15. Chariot (1) selon la revendication 1, dans lequel lesdits premier et second blocs de commande (14, 16) sont conçus de sorte que, lorsque ladite barre d'appui pour les mains (6) fait l'objet d'une manipulation de poussée sur ladite première extrémité et de tirée sur ladite seconde extrémité, lesdits moteurs (7) sont mis en oeuvre dans des sens de rotation contraires, afin de provoquer un changement de direction vers la droite, ou vers la gauche, dudit chariot (1).
